# EUROPÄISCHE PATENTSCHRIFT

(11) **EP 0 394 617 B1**
(45) Veröffentlichungstag und Bekanntmachung des Hinweises auf die Patenterteilung: **21.04.1993**
(21) Anmeldenummer: 90101830.9
(22) Anmeldetag: 30.01.1990
(51) Int. Cl.: E02D 5/34, E02D 13/06

(54) **Messvorrichtung zur Ermittlung des Betonierdruckes**
Measuring system for determining the pressure of concrete
Dispositif pour mesurer la pression de béton

(30) Priorität: 22.02.1989 DE 3905462
(43) Veröffentlichungstag der Anmeldung: 31.10.1990
(73) Patentinhaber: Bauer Spezialtiefbau GmbH, 86522 Schrobenhausen (DE)
(72) Erfinder: Schwarz, Wolfgang, Dr.-Ing., D-8898 Schrobenhausen (DE); Schittal, Bernd, Dipl.-Ing., D-8898 Schrobenhausen (DE); Brendemühl, Hans-Karl, Dipl.-Ing., D-8858 Neuburg (DE)
(74) Vertreter: Heim, Hans-Karl, Dipl.-Ing.

(56) Entgegenhaltungen:
- FR-A- 2 426 774
- GB-A- 1 394 393
- GB-A- 1 520 323
- GB-A- 2 210 919
- US-A- 4 575 283

## Beschreibung

Die Erfindung betrifft eine Bohrschnecke mit einer Einrichtung zur Messung des Betonierdruckes gemäß dem Oberbegriff des Anspruches 1.

Die Erstellung von Ortbetonpfählen mittels einer Bohrschnekke ist hinreichend bekannt. Diese Technik, bei der mittels einer Bohrschnecke, die mindestens so lang ist wie das herzustellende Bohrloch, zunächst das Bohrloch selbst und anschliessend mittels eines in der Bohrschnecke vorhandenen Seelenrohres als Betonierrohr der Ortbetonpfahl direkt betoniert wird, gehört heute zum gängigen Stand der Technik.

Um jedoch eine gute Qualität der so erstellten Ortbetonpfähle zu erreichen, ist es von größter Bedeutung, daß während des Betoniervorganges, d.h. während des Ziehens der Bohrschnecke, der in das Bohrloch eingebrachte Beton ständig unter Druck gehalten wird. Sofern dieser Betonierdruck an der Auslaßöffnung des Betonierrohres auf Null abfallen würde, könnte dies die Gefahr mit sich bringen, daß sich im Raum zwischen der Unterkante der Bohrschnecke und dem sich einstellenden Betonspiegel im Bohrloch ein Hohlraum bildet. In diesen Hohlraum könnte dann die seitlich anstehende Bohrlochwandung einbrechen, so daß auf diese Weise Fehlstellen im Ortbetonpfahl entstehen würden. Derartige Fehlstellen müssen jedoch im Hinblick auf die hohen Qualitätsanforderungen ausgeschlossen werden können.

Bisher wird zur Feststellung des Betonierdruckes dieser Druck am Übergang zwischen dem Betonierschlauch und dem Seelenrohr der Bohrschnecke gemessen. Als Meßeinrichtung werden hierfür üblicherweise sogenannte Quetschventile aus Gummi verwendet.

Bei diesem sozusagen kopfseitig an der Bohrschnecke erfaßten Betonierdruck regelt man den Betoniervorgang an der fußseitigen Auslaßöffnung der Bohrschnecke so, daß am Kopf der Bohrschnecke ein Betonierdruck von wenigstens 0,5 bar gemessen wird. Das Ziehen der Bohrschnecke erfolgt daher in Abhängigkeit von diesem kopfseitig festgestellten Mindestdruck von 0,5 bar. Hierbei resultiert dieser Druckwert von 0,5 bar daraus, daß sich unterhalb dieses Wertes keine zuverlässigen Meßwerte erzielen lassen.

Geht man bei einer Erfassung des Betonierdruckes nach der bisherigen Methode von einer Bohrschneckenlänge von ca. 20 m aus und legt ein spezifisches Gewicht des Betons für den Ortbetonpfahl von 24 kN/m³ zugrunde, so bedeutet dies bei einem kopfseitig festgestellten Betonierdruck von 0,5 bar am Fuß der Bohrschnecke einen Betonierdruck von ca. 5,3 bar.

Der am Fuß der Bohrschnecke tatsächlich vorhandenen Betonierdruck von etwa 5,3 bar kann jedoch in rolligen und trockenen Böden zur Folge haben, daß dieser hohe Druck das Wasser aus dem Beton auspreßt, was wiederum zur Folge haben kann, daß die Bohrschnecke selbst beim Betonieren im Bohrloch festgepreßt wird.

Da prinzipiell gesehen für einen ordnungsgemäß durchgeführten und zuverlässigen Betoniervorgang ein Betonierdruck von ca. 0,5 bis 1 bar im Bereich der Austrittsöffnung der Bohrschnekke ausreicht, wäre es daher wünschenswert, diesen maßgebenden Druck, der beim bisherigen Meßverfahren am Kopf der Bohrschnekke nicht erfaßbar ist, möglichst genau festzustellen.

Unter Berücksichtigung der vorgenannten Nachteile im Stand der Technik liegt daher der Erfindung die Aufgabe zugrunde, eine Bohrschnecke mit einem als Seelenrohr angeordneten Betonierrohr, einer Außenwandel und einer Einrichtung so zu konzipieren, daß der maßgebende Betonierdruck auch zuverlässig und konstruktiv einfach festgestellt werden kann.

Diese Aufgabe wird durch die Merkmale des kennzeichnenden Teils des Anspruches 1 gelöst.

Ein wesentlicher Gedanke der Erfindung kann darin gesehen werden, den bisher kopfseitig an der Bohrschnecke festgestellten Betonierdruck nunmehr tatsächlich im Fußbereich der Betonierzuführleitung der Bohrschnecke zu erfassen und von dort z.B. telemetrisch zu einer entsprechenden Auswerteinrichtung ausserhalb des Bohrloches zu übertragen. Mit dieser Maßnahme ist es möglich, den Betondruck in unmittelbarer Nähe der Austrittsöffnung am unteren Teil der Bohrschnecke zu messen. Dies gestattet es, den Betonierdruck sehr genau z.B. zwischen 0,5 bis maximal 2 bar zu halten, und damit kann ein Festpressen der Bohrschnecke während des Betoniervorganges hinreichend sicher vermieden werden, ohne daß die Betonsäule abreißt und Bodeneinschlüsse entstehen.

Das grundlegende Prinzip der Einrichtung zur Ermittlung des tatsächlichen Betondruckes im Bereich der Auslaßöffnung des Betonier- bzw. Seelenrohres der Bohrschnecke besteht darin, die Druckmessung möglichst nahe der Auslaßöffnung des Betonierrohres vorzunehmen. Da erhebliche Drehmomente und Vertikalkräfte beim Bohrvorgang auf die Bohrschnecke einwirken, sollte man annehmen, daß ein axial weitestgehend geschlossenes Betonierrohr diesen Anforderungen am besten gerecht wird. Man muß jedoch feststellen, daß eine derartige Auslegung der Bohrschnecke nicht zu zuverlässigen Meßergebnissen führt.

Dieses unzulängliche Meßprinzip führt man etwa darauf zurück, daß rotative und vertikale Kräfte das Verformungsverhalten im Meßbereich zu stark beeinträchtigten. Hinzu trat, daß der niedergebrachte Beton selbst keine so homogene Mischung ist, wie es zu Meßzwecken wünschenswert wäre.

Eine essentielle Idee der erfindungsgemäßen Bohrschmecke mit Meßeinrichtung kann daher im kraftmäßig entkoppelten Einbau der Druckmeßeinrichtung im fußseitigen Bereich des Betonierrohres gesehen werden, wozu entweder das Betonierrohr gänzlich aufgetrennt wird und einen oberen und einen unteren Teil aufweist, zwischen denen vorzugsweise eine rohrringartige Druckmeßvorrichtung über elastische Verbindungsmittel mit den beiden Rohrteilen eingesetzt wird. Zur kraftmäßigen Übertragung wird dann geeigneterweise zwischen der außenliegenden Bohrschnecke und dem oberen bzw. unteren Teil des Betonierrohres ein Überrohr vorgesehen. Eine andere Alternative besteht in der Anbringung von Distanzstükken zwischen der Innenwandung der Schnecke und dem oberen und unteren Teil des Betonierrohres. Derartige Distanzstücke können z.B. als Metallringe eingebracht werden. Gegebenenfalls genügen auch radiale Abstandsstücke, die jedoch im Hinblick auf die aufzunehmenden Kräfte ausgelegt sein müssen. Diese Distanzstücke können etwa einen den Bereich der Druckmeßvorrichtung überbrückenden Doppelkonus bilden, der jedoch starr mit dem Betonierrohr und der Schnecke verbunden ist.

Auf diese Weise wird die eigentliche Druckmeßeinrichtung weitgehend kraftentlastet, so daß eine unverfälschte Meßwertaufnahme für den fußseitigen Betonierdruck möglich ist.

In einer ebenfalls zweckmäßigen Gestaltung der Druckmeßeinrichtung kann das Betonierrohr mit z.B. mehreren über den Umfangsbereich symmetrisch verteilten größeren Wandungsöffnungen ausgestattet sein, in denen elastisch verbunden mit der Wandung des Betonierrohres Ringsegmente placiert sind, die vorzugsweise an ihrer Außenseite Verformungssensoren aufweisen. Die Verbindung zwischen Ringsegmenten aber auch dem Rohrring und der Wandung des Betonierrohres kann z.B. über Elastomer-Manschetten erfolgen, die fluiddicht, aber zumindest betonierdicht, das Betonierrohr nach außen abschließen.

Da die Bohrschnecke mit innerem Seelenrohr koaxial ausgebildet ist, besteht die Möglichkeit, die telemetrische Übertragung der Meßsignale von der fußseitigen Druckmeßeinrichtung nach oben über entsprechende Leitungen im Zwischenraum zwischen Schnecke und Betonierrohr zu führen. Oberhalb des Bohrloches und insbesondere am Kopf der Bohrschnecke kann eine weitere, gegebenenfalls berührungsfreie Meßwertübertragung oder eine Übertragung über Schleifringkontakte vom drehenden Teil der Bohrschnecke auf eine Auswerteinrichtung am ruhenden Teil des Bohrgerätes durchgeführt werden.

Die auf der Außenseite des Rohrringes der Druckmeßeinrichtung vorhandenen Verformungsaufnehmer, die zumindest diagonal gegenüberliegend, geeigneterweise aber in größerer Anzahl mit gleichem Abstand zueinander vorgesehen sind, erfassen daher im wesentlichen die radial auf die Druckmeßeinrichtung wirkenden Kräfte, die durch den Betonierdruck erzeugt werden. Der Betonierdruck im fußseitigen Bereich des Betonierrohres bewirkt daher wenn auch geringfügige Dehnungsänderungen am Rohrring, deren Feststellung eine zuverlässige Ableitung des tatsächlich existierenden Betonierdruckes zuläßt. Die Verformungsaufnehmer sind daher geeigneterweise als Dehnungssensoren, z.B. piezoelektrische Sensoren ausgelegt. Um Meßverfälschungen weitgehend ausschließen zu können, erfolgt eine Durchschnittswertbildung der festgestellten Druckwerte, wobei die Meßsignale als proportional zum auf die Innenwandung des Rohrringes der Druckmeßeinrichtung wirkender Druck angesehen werden.

Im Hinblick auf eine hohe Genauigkeit der festgestellten Betonierdruckwerte werden die Ringsegmente bzw. der Rohrring der Druckmeßeinrichtung etwa im axial mittleren Bereich mit geringerer Wandstärke ausgebildet, auf der dann die entsprechenden Verformungsaufnehmer placiert werden. Dies ermöglicht eine höhere Ansprechempfindlichkeit und damit Genauigkeit für die Ermittlung des Betonierdruckes. Aufgrund der Kraftentkopplung der Druckmeßeinrichtung können die Rohrsegmente oder der Rohrring auch aus einem Kunststoff oder Elastomer bestehen, so daß die Materialdehnungen noch genauer erfaßt werden können.

Aufgrund der Kraftentkopplung der fußseitig vorgesehenen Druckmeßeinrichtung ermöglicht die Erfindung eine sehr präzise und genaue Feststellung des tatsächlich im Bereich der Auslaßöffnung des Betonierrohres vorhandenen Betonierdruckes. Aufgrund dieser Werte kann das Ziehen der Bohrschnecke so geregelt werden, daß ein weitgehend homogener Ortbetonpfahl errichtet werden kann.

Die Erfindung wird nachstehend unter Bezugnahme auf die schematischen Figuren anhand eines Ausführungsbeispieles noch näher erläutert. Es zeigen:
- Fig. 1: eine schematische Darstellung eines Bohrgerätes mit Bohrschnecke und der Erstellung eines Ortbetonpfahles mit herkömmlich angeordneter Meßeinrichtung und
- Fig. 2: eine bruchstückartige Darstellung des unteres Bereiches einer Bohrschnecke im Axialschnitt mit erfindungsgemäßer Meßeinrichtung.

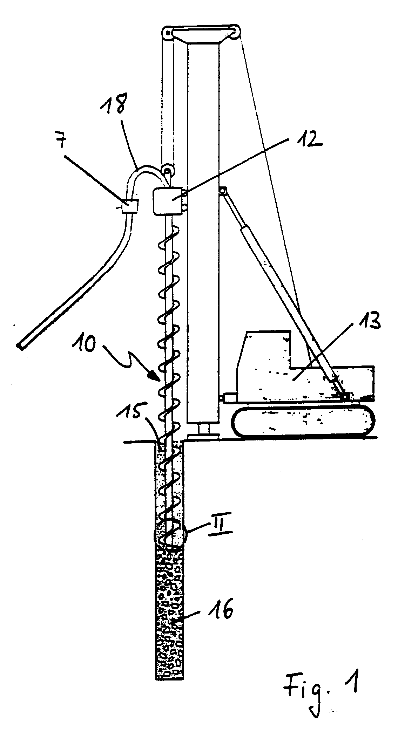

In der Darstellung nach Fig. 1 ist ein Bohrwagen 13 mit einer vertikal ausgerichteten Bohrschnecke 10 gezeigt. Die Bohrschnecke 10 wird über einen Kraftdrehkopf 12 des Bohrwagens angetrieben und verfahren. Über den Kraftdrehkopf 12 steht das innere Seelenrohr der Bohrschnecke 10 mit einem flexiblen Betonierschlauch 18 in Verbindung, über den der Beton in das Bohrloch 16 unter Druck niedergebracht wird.

Im Beispiel nach Fig. 1 ist das Bohrloch 16 etwa zur Hälfte bereits mit Beton gefüllt, so daß das fußseitige Ende der Bohrschnecke 10 etwa im Bereich II in der Phase des langsamen Ziehens gehalten ist. Der Ortbetonpfahl 16 ist daher bereits zur Hälfte niedergebracht.

Im Stand der Technik hat man bisher den Betonierdruck am fußseitigen Ende der Betonierschnecke 10 dadurch ermittelt, daß mit einer kopfseitigen Meßeinrichtung 7, die z.B. als Quetschventil ausgelegt war, der Betonierdruck am Übergang zum Betonierrohr bzw. dem Kraftdrehkopf 12 erfaßt wurde. Dies ergab verständlicherweise verfälschte fußseitige Betonierdruckwerte.

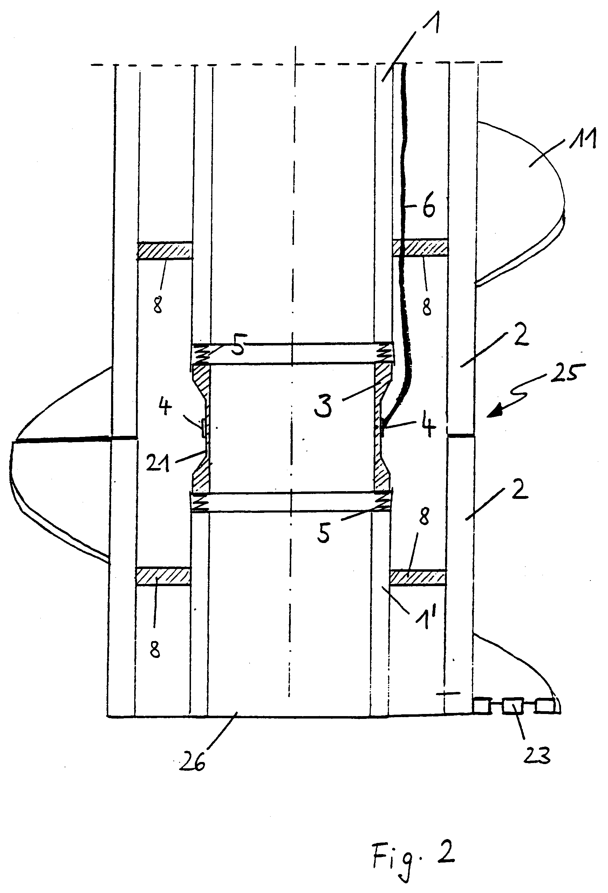

Eine Bohrschnecke mit Meßeinrichtung gemäß Erfindung ist schematisch im Axialschnitt in Fig. 2 dargestellt. Die Bohrschnecke 10 nach Fig. 1 besteht, wie in Fig. 2 erkennbar, aus der äußeren Schnecke 2 mit daran angebrachter Wendel 11. Die Wendel 11 besetzt bohrseitig Fräszähne 23, die etwa in Höhe der unteren Auslaßöffnung 26 des Betonierrohres 1, 1' zu liegen kommen.

Als Seelenrohr innerhalb der Bohrschnecke 2 ist in Fig. 2 das eigentliche Betonierrohr mit einem oberen Teil 1 und und einem unteren Teil 1' vorgesehen.

Im Beispiel ist der obere Teil 1 des Betonierrohres vom unteren Teil 1' axial um eine gewisse Strecke beabstandet. Innerhalb dieses axialen Zwischenraumes zwischen oberem Teil 1 und unterem Teil 1' ist ein z.B. aus Kunststoff bestehender Rohrring 3 angeordnet. Dieser Rohrring 3 steht über umlaufende,geschlossene obere und untere elastische Verbindungsmittel 5 mit dem oberen bzw. unteren Teil des Betonierrohres in Verbindung. Diese Verbindungsmittel 5 können z.B. geschlossen umlaufende Elastomer-Manschetten sein, die fluiddicht ausgelegt sind. Wünschenswert ist hierbei eine Art federnde Lagerung des Rohrringes 3, ohne daß Drehkräfte oder Axialkräfte auf den Rohrring 3 übertragen werden. Im axial mittleren Bereich weist der Rohrring 3 auf seiner Außenseite eine Wandschwächung 21 auf, auf der die entsprechenden Verformungsaufnehmer 4, z.B. als Dehnungsmeßstreifen, aufgebracht sind. Die Meßsignale dieser Verformungsaufnehmer werden über Leitungen 6 im Zwischenraum zwischen Betonierrohr 1 und Schnecke 2 nach oben geleitet.

Im Hinblick auf eine Kraftübertragung vom oberen Teil 1 des Betonierrohres zum unteren Teil 1' ist im Ausführungsbeispiel nach Fig. 2 oberhalb und unterhalb des Rohrringes 3 ein Distanzring 8 bzw. einzelne Distanzstücke starr zwischen Betonierrohr und Bohrschnecke vorhanden. Die elastische Verbindungen 5 und der Rohrring 3 werden daher weitestgehend von ungewünschten Krafteinwirkungen freigehalten. Auf diese Weise kann auch eine Überlagerung mit Störsignalen aus der mechanischen Beanspruchung der Bohrschnecke 2 sowie des Betonierrohres 1 vermieden werden.

Die auf der Außenseite des Rohrringes 3 aufgebrachten Verformungssensoren 4 erfassen daher eine Durchmesseränderung des Rohrringes 3 als Funktion des Betonierdruckes bzw. des Flüssigkeitsdruckes im fußseitigen Bereich des Betonierrohres.

Der an der Auslaßöffnung 26 der Bohrschnecke 10 anstehende Betonierdruck kann daher sehr genau und zuverlässig mittels der vorausgehend beschriebenen Druckmeßeinrichtung erfaßt und z.B. telemetrisch nach oben geleitet werden. Eine Ermittlung der festgestellten Druckwerte ergibt daher einen aussagekräftigen, fußseitigen Betonierdruck, in dessen Abhängigkeit ein sicheres Ziehen der Bohrschnecke erfolgen kann.

## Patentansprüche

1. Bohrschnecke, insbesondere zur Erstellung von Ortbetonpfählen, mit einem als Seelenrohr (1, 1') angeordneten Betonierrohr, einer Außenwendel (11) und einer Einrichtung zur Messung des Betonierdruckes, dadurch **gekennzeichnet**,
daß die Druckmeßeinrichtung (3 bis 6) nahe der fußseitigen Austrittsöffnung (26) des Seelenrohres (1, 1') und zwischen einem oberen und einem unteren Teil des Seelenrohres (1, 1') kraftmäßig entkoppelt angeordnet ist und
mehrere über den Umfang des Seelenrohres (1, 1') symmetrisch zueinander angeordnete Rohrsegmente oder einen geschlossenen Rohrring (3) mit Verformungsaufnehmern (4) aufweist,
die telemetrisch mit einer externen Auswerteeinheit verbunden sind.

2. Bohrschnecke nach Anspruch 1, dadurch gekennzeichnet, daß die kraftmäßige Entkopplung der Druckmeßeinrichtung (3-6) über elastische, insbesondere fluiddichte Elemente (5) erfolgt.

3. Bohrschnecke nach Anspruch 1 oder 2,
dadurch **gekennzeichnet**,
daß der obere (1) und untere Teil (1′) des Seelenrohres über Distanzkörper (8) oder ein Überschubrohr kraftschlüssig verbunden sind.

4. Bohrschnecke nach einem der Ansprüche 1 bis 3,
dadurch **gekennzeichnet,**
daß die Verformungsaufnehmer (4) Dehnungssensoren, insbesondere piezoelektrische Sensoren, sind, die telemetrisch mit einer Auswertschaltung, insbesondere am Kopf der Bohrschnecke (10) verbunden sind.

5. Bohrschnecke nach Anspruch 4
dadurch **gekennzeichnet,**
daß die Verformungsaufnehmer (4) über eine zwischen dem Seelenrohr (1,1') und der Schnecke (2) vorgesehene Leitung (6) mit der Auswertschaltung verbunden sind.

6. Bohrschnecke nach einem der Ansprüche 1 bis 5,
dadurch **gekennzeichnet**,
daß die Rohrsegmente bzw. der Rohrring (3) etwa axial mittig eine Wandschwächung (21) aufweisen, an der die Verformungsaufnehmer (4) placiert sind.

7. Bohrschnecke nach einem der Ansprüche 1 bis 6,
dadurch **gekennzeichnet,**
daß die Distanzstücke (8) in Axialrichtung geneigt oder etwa radial zwischen dem Seelenrohr (1,1') und der Schnekke (2) angeordnet sind.

8. Bohrschnecke nach einem der Ansprüche 1 bis 7,
dadurch **gekennzeichnet**,
daß die Rohrsegmente oder der Rohrring (3) aus Stahl, Kunststoff oder einem Elastomer bestehen.

9. Bohrschnecke nach einem der Ansprüche 1 bis 8
dadurch **gekennzeichnet,**
daß das Meßsignal der Verformungsaufnehmer (4) proportional zum mittleren Betonierdruck ist, der auf die Rohrsegmente bzw. den Rohrring (3) wirkt.

## Claims

1. Earth drilling worm, particularly for installing in-situ concrete piles, with a concreting tube in the form of a web tube (1, 1'), an outer helix (11) and a device for measuring the concreting pressure, characterized in that the pressure gauge (3 to 6) is arranged in force-decoupled manner close to the base of the outlet (26) of the web tube (1, 1') and between an upper and a lower part of the web tube (1, 1') and has several symmetrically arranged tube segments over the circumference of the web tube (1, 1') or a closed tube ring (3) with deformation transducers (4), which are telemetrically connected to an external evaluating unit.

2. Earth drilling worm according to claim 1,
characterized in that the force decoupling of the pressure gauge (3 to 6) takes place by means of elastic and in particular fluid-tight elements (5).

3. Earth drilling worm according to claims 1 or 2,
characterized in that the upper part (1) and the lower part (1') of the web tube are interconnected in a force coupled manner by means of spacers (8) or a sleeve tube.

4. Earth drilling worm according to one of the claims 1 to 3,
characterized in that the deformation transducers (4) are expansion sensors, particularly piezoelectric sensors, which are telemetrically connected to an evaluating circuit, particularly on the head of the earth drilling worm (10).

5. Earth drilling worm accoding to claim 4,
characterized in that the deformation transducers (4) are connected by means of a line (6) located between the web tube (1, 1') and the worm (2) to the evaluating circuit.

6. Earth drilling worm according to one of the claims 1 to 5,
characterized in that the tube segments or the tube ring (3) have in a roughly axial central manner a wall weakening (21) on which are placed the deformation transducers (4).

7. Earth drilling worm according to one of the claims 1 to 6,
characterized in that the spacers (8) are axially inclined or positioned roughly radially between the web tube (1, 1') and the worm (2).

8. Earth drilling worm according to one of the claims 1 to 7,
characterized in that the tube segments or the tube ring (3) are made from steel, plastic or an elastomer.

9. Earth drilling worm according to one of the claims 1 to 8,
characterized in that the measurement signal of the deformation transducers (4) is proportional to the average concreting pressure acting on the tube segments or the tube ring (3).

## Revendications

1. Vis sans fin de forage, destinée en particulier à l'installation des pieux en béton sur le terrain, avec un tube de bétonnage disposé comme tube central (1, 1'), une hélice extérieure (11) et un dispositif pour mesurer la pression de bétonnage, caractérisée :
- en ce que le dispositif de mesure de la pression (3 à 6) est placé près de l'ouverture de sortie (26) du côté de la base du tube central (1, 1') et se trouve désaccouplé en fonction de la force qui s'exerce entre une section supérieure et inférieure du tube central (1, 1') et,
- il comporte plusieurs segments de tube disposés sur le pourtour du tube central (1, 1'), de façon symétrique l'un par rapport à l'autre ou bien un anneau tubulaire (3) fermé avec des capteurs de déformation, qui sont reliés de façon télémétrique avec une unité d'exploitation externe.

2. Vis sans fin de forage selon la revendication 1, caractérisée :
- en ce que le désaccouplement suivant la force du dispositif de mesure de pression (3-6) se réalise par l'intermédiaire d'éléments (5) élastiques, en particulier fluides et denses.

3. Vis sans fin de forage selon les revendications 1 ou 2, caractérisée :
- en ce que la partie supérieure (1) et la partie inférieure (1') du tube central sont reliées par interpénétration par la force par l'intermédiaire d'un corps distanciateur (8) ou d'un tube couvre-joint.

4. Vis sans fin de forage selon l'une des revendications 1 à 3, caractérisée :
- en ce que les capteurs de déformation (4) sont des détecteurs d'allongement, en particulier des détecteurs piézo-électriques, qui sont reliés de façon télémétrique avec un circuit d'exploitation, en particulier sur la tête de la vis sans fin de forage (10).

5. Vis sans fin de forage selon la revendication 4, caractérisée :
- en ce que les capteurs de déformation (4) sont reliés au circuit d'exploitation par une ligne (6) passant entre le tube central (1, 1') et la vis sans fin (2).

6. Vis sans fin de forage selon l'une des revendications 1 à 5, caractérisée :
- en ce que les segments de tube ou l'anneau tubulaire (3) ont à peu près axialement au centre un amincissement de paroi (21), sur lequel sont mis en place des capteurs de déformation (4).

7. Vis sans fin de forage selon l'une des revendications 1 à 6, caractérisée :
- en ce que les pièces distanciatrices (8) sont disposées dans le sens axial inclinées ou à peu près radialement entre le tube central (1, 1') et la vis (2).

8. Vis sans fin de forage selon l'une des revendications 1 à 7, caractérisée en ce que :
- les segments de tube ou l'anneau tubulaire (3) sont en acier, en matière synthétique ou en un élastomère.

9. Vis sans fin de forage selon l'une des revendications 1 à 8, caractérisée :
- en ce que le signal de mesure du capteur de déformation (4) est proportionnel à la pression moyenne de bétonnage, qui agit sur les segments de tube ou l'anneau tubulaire (3).
